(19) **Europäisches Patentamt**
**European Patent Office**
**Office européen des brevets**

(11) **EP 3 367 588 B1**

(12) **EUROPEAN PATENT SPECIFICATION**

(45) Date of publication and mention
of the grant of the patent:
**25.09.2019 Bulletin 2019/39**

(51) Int Cl.:
**H04B 7/06** (2006.01)

(21) Application number: **17158429.5**

(22) Date of filing: **28.02.2017**

(54) **METHOD AND COMPUTER-READABLE MEDIUM TO SELECT A PRECODING BEAM AMONG A SET OF POSSIBLE PRECODING BEAMS**

VERFAHREN UND COMPUTERLESBARES MEDIUM ZUR AUSWAHL EINES VORCODIERUNGSSTRAHLS AUS EINER GRUPPE VON VORCODIERUNGSSTRAHLEN

PROCÉDÉ ET SUPPORT LISIBLE PAR ORDINATEUR POUR SÉLECTIONNER UN FAISCEAU DE PRÉCODAGE PARMI UN ENSEMBLE DE FAISCEAUX DE PRÉCODAGE POSSIBLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**29.08.2018 Bulletin 2018/35**

(60) Divisional application:
**19190205.5**

(73) Proprietor: **Nokia Solutions and Networks Oy**
**02610 Espoo (FI)**

(72) Inventors:
• **BEN RACHED, Nidham**
**91620 Nozay (FR)**
• **CAPDEVIELLE, Veronique**
**91620 Nozay (FR)**

(74) Representative: **Nokia EPO representatives**
**Nokia Technologies Oy**
**Karakaari 7**
**02610 Espoo (FI)**

(56) References cited:

• NOFAL M ET AL: "Performance and feasibility of different switched-BEAM antennas for the stratospheric platform mobile communications covering newly developing regions", RADIO SCIENCE NINETEENTH NATIONAL CONFERENCE OF THE PROCEEDINGS NRSC 2 002 MAR. 19-21, 2002, PISCATAWAY, NJ, USA,IEEE, 19 March 2002 (2002-03-19), pages 133-140, XP010596134, ISBN: 978-977-5031-72-3
• NOKIA ALCATEL-LUCENT SHANGHAI BELL: "RRM Requirements supporting NR beam management", 3GPP DRAFT; R4-1610329 BEAM MANAGEMENT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG4, no. Reno, USA; 20161114 - 20161118 14 November 2016 (2016-11-14), XP051180431, Retrieved from the Internet: URL:http://www.3gpp.org/ftp/Meetings_3GPP_ SYNC/RAN4/Docs/ [retrieved on 2016-11-14]
• ZTE ET AL: "Group based beam management for NR-MIMO", 3GPP DRAFT; R1-1701798 GROUP BASED BEAM MANAGEMENT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20170213 - 20170217 12 February 2017 (2017-02-12), XP051208964, Retrieved from the Internet: URL:http://www.3gpp.org/ftp/Meetings_3GPP_ SYNC/RAN1/Docs/ [retrieved on 2017-02-12]

**Description**

FIELD OF INVENTION

The present subject matter relates to a method to select a precoding beam among a set of possible precoding beams. This precoding beam can for example be used to exchange data between a base station and a user equipment.

BACKGROUND

In order to combat path loss, and to maximize spectral efficiency, directional beamforming/precoding solutions are commonly used.

It is straightforward to state that the optimal beam pattern per user, is to be updated as the user moves and changes its location: spatial characteristics of the channel paths between the base station and the user, are modified. The beam tracking feature intends at switching the best precoding beam according the displacement of the user.

However, the higher the user's mobility or the evolution of the radio electrical environment of the user, the higher the rate of beam switching to guarantee steady beamforming gain. At the same time the risk for the user to move out of its beam coverage area is increasing and so the risk of connexion dropping.

The problem is critical for 5G massive MIMO beamforming in millimeters waves systems, due to narrow beamwidth and uncertainty in beam steering due to analog impairments in the radio frequency chain for example the phase noise.

The problem that is addressed is to design a precoding solution that suits to mobile use cases, by preventing call dropping, guaranteeing continuous coverage, taking into account the user mobility information, especially the speed.

The present subject matter also allows the stabilization of the beam tracking procedure, by reducing the beam switching rate, to decrease the beam misalignment probability, to reduce the overhead due to beam refinement protocol to save time and radio resources elements used for transmitting refined beam reference signals, while increasing the beamforming gain, through minimal beamwidth.

The document by NOFAL M ET AL: "Performance and feasibility of different switched-BEAM antennas for the stratospheric platform mobile communications covering newly developing regions", RADIO SCIENCE NINETEENTH NATIONAL CONFERENCE OF THE PROCEEDINGS NRSC MAR. 19-21, 2002, PISCATAWAY, NJ, USA, IEEE, pages 133-140, ISBN: 978-977-5031-72-3 discloses that, with narrow beams, an erroneous beam selection is more likely to happen, this leading to a higher beam-switching rate. To mitigate this, wider beams than the narrowest ones could be used.

The 3GPP contribution by NOKIA ALCATEL-LUCENT SHANGHAI BELL: "RRM Requirements supporting NR beam management",3GPP DRAFT; R4-1610329 discloses mechanisms for reporting information in order to select the best beams.

The 3GPP contribution by ZTE ET AL: "Group based beam management for NR-MIMO", 3GPP DRAFT; R1-1701798 discloses techniques for beam grouping and selection. However, beams are not grouped according to their width.

SUMMARY

This summary is provided to introduce concepts related to methods dedicated to select a precoding beam among a set of possible precoding beams.

In one implementation a method to select a precoding beam among a set of possible precoding beams is described. This selected precoding beam is use to exchange data between a base station and a user equipment. The possible precoding beams are grouped according to their beamwidth out of a set of possible beamwidths. The method comprises an initial step of selecting one of the possible beamwidths so called selected beamwidth. The method also comprises the following iterative steps; a step of determining measurements associated to precoding beams having this selected beamwidth and a step of selecting the current precoding beam as the one, among the precoding beams having this selected beamwidth, with the best measurements and a step of updating the measurements associated to the precoding beams having the selected beamwidth. Furthermore and if one of the measurement associated to one of the precoding beams, having the selected beamwidth, is above the measurement associated to the current precoding beam, the method comprises a step of changing the current precoding beam to the one with the measurements above the measurements associated to the former current precoding beam and a step of updating a beam switching rate and when the beam switching rate is above a first threshold a step of increasing the selected beamwidth and when the beam switching rate is below a second threshold a step of decreasing the selected beamwidth.

In another implementation a computer-readable medium is described. This computer-readable medium has embodied a computer program configured to realize a method to select a precoding beam among a set of possible precoding beams. This selected precoding beam is use to exchange data between a base station and a user equipment.

The possible precoding beams are grouped according to their beamwidth out of a set of possible beamwidths. The method comprises an initial step of selecting one of the possible beamwidths so called selected beamwidth. The method also comprises the following iterative steps; a step of determining measurements associated to precoding beams having this selected beamwidth and a step of selecting the current precoding beam as the one, among the precoding beams having this selected beamwidth, with the best measurements and a step of updating the measurements associated to the precoding beams having the selected beamwidth. Furthermore and if one of the measurement associated to one of the precoding beams, having the selected beamwidth, is above the measurement associated to the current precoding beam, the method comprises a step of changing the current precoding beam to the one with the measurements above the measurements associated to the former current precoding beam and a step of updating a beam switching rate and when the beam switching rate is above a first threshold a step of increasing the selected beamwidth and when the beam switching rate is below a second threshold a step of decreasing the selected beamwidth.

## BRIEF DESCRIPTION OF THE FIGURES

The detailed description is given with reference to the accompanying figures. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:

Figure 1 presents a first embodiment of the method of the present subject matter.

Figure 2 presents a beam resolution or beamwidth table

Figure 3 presents a method, from the point of view of the user equipment, to exchange information between a user equipment and a base station in order to select a precoding beam

Figure 4 presents the method of the figure 3, from the point of view of the base station

In the present document, the word "exemplary" is used herein to mean "serving as an example, instance, or illustration." Any embodiment or implementation of the present subject matter described herein as "exemplary" is not necessarily to be construed as preferred or advantageous over other embodiments.
It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## DESCRIPTION OF EMBODIMENTS

The aim of the present subject matter is a method to select a precoding beam among a set of possible precoding beams. The different possible precoding beams are grouped according to their beamwidth and generally there are several possible precoding beams for a given beamwidth. The selected precoding beam will be used to exchange data between a base station and a user equipment.

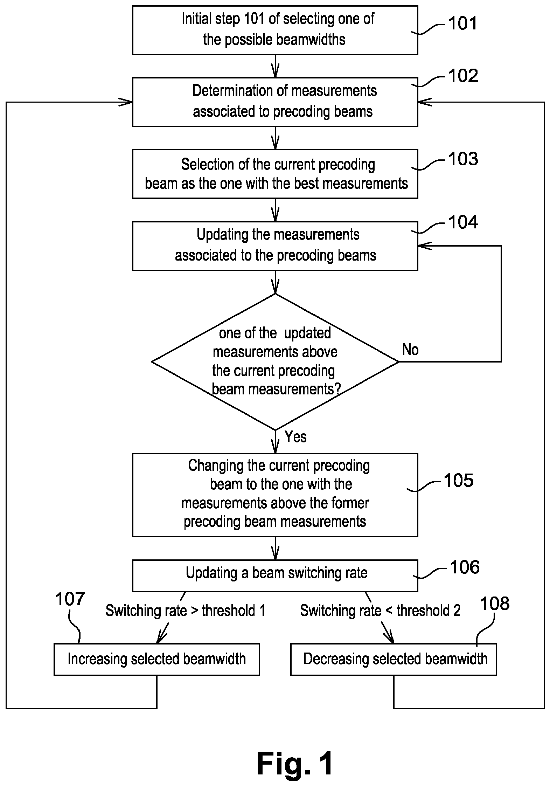

The figure 1 describes the method to select the precoding beam. This method comprises an initial step 101 of selecting one of the possible beamwidths. After that the method comprises the following iterative steps:

•    a step 102 of determining measurements associated to precoding beams having this selected beamwidth and
•    a step 103 of selecting the current precoding beam as the one, among the precoding beams having this selected beamwidth, with the best measurement and
•    a step 104 of updating the measurements associated to the precoding beams having the selected beamwidth and

Furthermore and if one of the measurement associated to one of the precoding beams, having the selected beamwidth, is above the measurement associated to the current precoding beam, the method comprising

•    a step 105 of changing the current precoding beam to the one with the measurements above the measurements associated to the former current precoding beam
•    a step 106 of updating a beam switching rate and

- when the beam switching rate is above a first threshold a step 107 of increasing the selected beamwidth

- when the beam switching rate is below a second threshold a step 108 of decreasing the selected beamwidth

Beamwidth is also known as resolution of the beam.

In an embodiment the initial 101 step of selecting one of the possible beamwidths is configured to select the largest beamwidth. In an embodiment the base station transmits Beam Reference Signals over beams with largest beamwidth. The user equipement then measures the power that is received over the scanned reference signals and then reports to the base station the beam index and maximum received power to the base station.

Regarding the first threshold, a too low value will trigger unusually the beamwidth increase process, which degrades the expected beamforming gain. In opposite a too high value will have an impact on beam misalignment.

Regarding the second threshold a too low value will limit the opportunity of refining the beamwidth, which negatively impacts the beamforming gain. In opposite a too high value increases too 'optimistically' the opportunity of beam refining, which leads to beam misalignment and call drop.

The optimal values for these two thresholds can be setup experimentally and offline, through Self Configuring solutions. The objective is to maximize the beamforming gain, with the constraint of minimal beamforming misalignment. This tradeoff can be simply captured by maximizing the user throughput.

An example of implementation for a fine tuning of these thresholds, that is done 'offline', during an experimental phase, can be based on optimization theory methods to find the global optimum of a function to maximize. Different functions to maximize can be considered. The objective is to maximize for all the users, (or x% of these users), the beamforming gain, or the SINR, while minimizing the beam misalignment probability. For example, we can maximize the aggregation of averaged user throughput using the following formula:

$$F(First\ Threshold, Second\ Threshold) = \sum_{k=1}^{N} u\_th_k$$

With $u\_th_k$, being the user throughput of user $k$

In other embodiment the following formula can be used:

$$F(First\ Threshold, Second\ Threshold) = \prod_{k=1}^{N} e^{-prob\_BeamMisalignment_k}.SINR_k$$

With:

- *prob_BeamMisalignment* being the probability of beam misalignment. The probability of beam misalignment can be estimated by the ratio: the time during the serving user beam is not appropriate out of the time during which the user beam is the relevant one.
- $SINR_k$ being the Signal to Interference and Noise ratio at user $k$.

The first and second threshold can be determined using Simulated Annealing (SA) principles. Simulated annealing is a well-known meta heuristic method for solving a complex global optimization problem: maximize (or minimize) a function. The main advantages of using SA compared to other methods is that it can deal with non-linear, non-differentiable problems with local optima. Simulated Annealing is inspired from the annealing process in metallurgy where the metal is heated then cooled before being frozen in the desired state: when the looked-for material properties are met (like hardness, flexibility). The system, via the method described below, is controlled by the temperature *T*:

- When temperature is high, large bounces (system changes) are allowed.
- When temperature is low, less random movements from one state to another is tolerated.

The system is then frozen to the stable optimal state.

To determine the first of second threshold of the method of the present subject matter the following step can be used:

1. The algorithm starts with an initial random state: *S* = (*First Threshold, Second Threshold*)
2. The resulting objective function is calculated: *F*(*S*)

3. A neighboring random solution is then generated: *S' = Neighbour(S)*

4. The objective function is then re-evaluated on this updated state: neighbor to S: *F(S')*

5. If *F(S') > F(S)* then update the state: *S := S'*

If *F(S') < F(S)* then, update the state with an acceptance probability (even if it outputs a worse objective function, but this is to avoid being stuck in a local optimum):

Accept with probability: $\exp\left(-\frac{\Delta}{T}\right)$ with *Δ= F(S) - F(S')* and *T,* the Temperature.

Reject with probability: $1 - \exp\left(-\frac{\Delta}{T}\right)$

Note: indeed, at high temperatures, the new state can be accepted even with high Δ variations. At low temperatures, the new state is accepted only when the measured variations: Δ are small.

6. Adjust the temperature: for example, *T = α.T*, with *α* a constant (the cooling factor) and

Go to step 2.

With the method of the previous section, the temperature is initialized at a fixed value $T_0$. Experimentations realized offline can help improving this fixed value. This initialization value must be high enough in order to allow each solution determined at the beginning of the method to be accepted with a probability of almost 1. After that this temperature can be up-dated using different solutions. For example using the formula *T = α. T* wherein *α* est fixed parameter comprises between 0.8 and 0.99. One other formula can be $T_k = T_0.\alpha^k$ wherein *k* is the temperature cycle, this formula is also known as "Exponential multiplicative cooling".

In some other implementation/variation of the method of the previous section, the cooling schedule part of the method can interact several times using the same temperature. The steps 2 and 5 of the method of the section 27 are then realized L times using the same temperature and after that the cooling schedule is used.

In an embodiment the method of section 27 stops when the number of iterations is reached or when *F(First Threshold, Second Threshold) > Target,* or when the function *F(First Threshold, Second Threshold)* converges toward a maximal with only small oscillations.

By measurements we mean power measurement on Reference Signals that are transmitted on different directions, over different beams. These reference signals are Beam Reference Signals (BRS) or Beam Refinement Reference Signals (BRRS), as specified in SIGs for Verizon Wireless and Korean Telecom. The SIG for Verizon Wireless can be obtain in the website http://www.5gtf.org/ and the SIG for Korean Telecom can be obtain in the website https://www.kt.com/eng/biz/kt5g_02.jsp.

By beam switching rate, we mean the frequency of changing the best serving beam on a given beamwidth for a given user. This is an indication that the considered beamwidth is or is not the relevant one, given current mobility characteristics of the user or the environment. Beam switching rate can be calculated by the ratio of the number best serving beam changes at a given beamwidth to the observation duration.

In an embodiment if the beam switching rate is comprised between the first and second threshold a step of keeping the same beamwidth is realized.

In other words the previously described method relies on appropriate beamwidth adaptation, depending on the user/environment mobility profile, captured through beam switching statistics and rate metric. Supposing that multi-resolution precoding is enabled, the BS has the capability to transmit over beams with quantized different beamwidths:

- Large beamwidths (so large beam coverage) are to be assigned to users with high beam switching rate. Purpose is to guarantee stability, avoid beam misalignment, guarantee coverage performances between consecutive beam updating periods, (this is achieved at the expense of data rate),
- Smaller beamwidths are preferred for low / medium beam switching rates users. Purpose is to take profit of higher beamforming gain, higher Multi Users capacity gain, enabled by refined beamwidths.

The method of the present subject matter relies on adaptive precoding beam selection process (by adaptive precoding beam selection process we mean a process consisting iteratively, in selecting from a pre-set multi-resolution codebook, the best beam precoding(s) with a given 'optimal' resolution (beamwidth) to achieve beamforming gain, with guaranteed stability relative to beam switching rate, misalignment risks, etc.). Within this method a multi-resolution codebook is used to obtain the different precoding beams. By multi-resolution codebooks we mean a set of precoding beams with given resolution (quantized beamwidths). Within this method the selected precoding beam has a beamwidth function of the user beam switching statistics.

Within the next sections of this divulgation the following notations will be used:

$B_b$ : the current beam, on selected beam iteration b (similarly, beamwidth resolution).

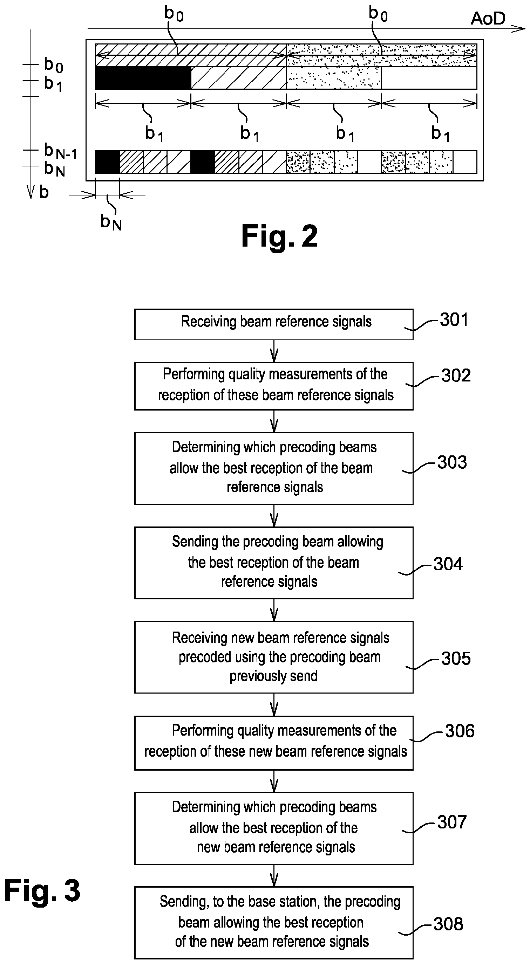

$b : b \in \{b_0, ..., b_N\}$ - See Figure 2.

$B_b^n$ : Neighbor candidate beam $n$ ($n < K$, maximum number of candidate beams), on the current beamwidth resolution $b$.

$S_b, S_b^n, S_b^*$: respectively the beam state measurement on the current beam, on the neighbor candidate alternative beam $n$ and best beam state over the current, neighbor candidate beams.

L: Number of beam measurements reported to the Base Station.

$R_b$ : beam switching rate for the current selected beamwidth b.

$n\_sw_b$ : Number of switching occurrences.

$R^{ref}, R^{Max}$ : Reference beam switching rate threshold, Maximum beam switching rate.

$\Delta_r$: Hysteresis like threshold on beam switching rate.

$\Delta_s$: Hysteresis like threshold on beam measurements.

Using the previously presented notations, the method of the present subject matter can be expressed as the following step:

- **Step 1:** Set $b = b_0$, perform beam acquisition: select $B_b$.
- **Step 2:** UE performs measurements on $B_b$ and $\{B_b^n, n = 1 \dots K\}$ and reports the current and L best beam measurements: $S_b$ and $S_b$ and $\{S_b''', m = 1 \dots L\}$   Note: beam measurements have been configured by the BS.
- **Step 3:** Rank the current and best beams, and update switching statistics, beam selection.
  Supposing: beam measurement is Beam RSRP, SNR:

  If $S_b^* > S_b + \Delta_s$

$$B_b = B_b^*$$

$$n\_sw_b = n\_sw_b + 1$$

  If time $\equiv 0$ [T] (This is time to update switching rate):

$$R_b = \frac{n\_sw_b}{T}$$

$$n\_sw_b = 0$$

- **Step 4**: Fallback
  If $R_b > R^{Max}$ Go to Step 1
- **Step 5**: Increase beamwidth
  If $R_b > R^{ref} + \Delta_r$ or if $R_b > First\ Threshold$

$$b = b - 1$$

$B_b$ and $\{B_b^n, n = 1 \dots K\}$ are updated
  Go to Step 2
- **Step 6**: Decrease Beamwidth

If $R_b < R^{ref} - \Delta_r$ or if $R_b < Second\ Threshold$

$$b = b + 1\ (Beam\ refinement)$$

$B_b$ and $\{B_b^n, n = 1 \dots K\}$ are updated
Go to Step 2

The present subject matter also comprises a method to exchange information between a user equipment and a base station in order to select a precoding beam. This method is described figure 3 and from the point of view of the user equipment comprises the following iterative steps:

A step 301 of receiving, from the base station, beam reference signals

A step 302 of performing quality measurements of the reception of these beam reference signals

A step 303 of determining which precoding beams allow the best reception of the beam reference signals

A step 304 of sending, to the base station, the precoding beam allowing the best reception of the beam reference signals

A step 305 of receiving, form the base station, new beam reference signals precoded using the precoding beam previously send

A step 306 of performing quality measurements of the reception of these new beam reference signals

A step 307 of determining which precoding beams allow the best reception of the new beam reference signals

A step 308 of sending, to the base station, the precoding beam allowing the best reception of the new beam reference signals

The iterative process stops when the lowest beamwidth is reached for a beam switching rate that do not exceed a pre-set upper bound.
This method can be applied to any precoding beams (either digital, hybrid or analog) with multiple possible beamwidths. Per beamwidth, there is a set of precoders to cover a given spatial area (in azimuth and elevation).
An embodiment of the present subject matter is a user equipment. This user contains different modules configured to realize the method of the figure 3. This user equipment comprises receiving means and transmission means. The receiving means are configured:

- to receive, from the base station, beam reference signals and
- to receive, form the base station, new beam reference signals precoded using the precoding beam previously sent.

The transmissions means are configured:

- to send, to the base station, the precoding beam allowing the best reception of the beam reference signals and
- to send, to the base station, the precoding beam allowing the best reception of the new beam reference signals.

The user equipment also comprises a plurality of modules. These modules are configured:

- to perform quality measurements of the reception of these beam reference signals and
- to determine which precoding beams allow the best reception of the beam reference signals and
- to perform quality measurements of the reception of these new beam reference signals and to determine which precoding beams allow the best reception of the new beam reference signals.

The different modules will be realized by one or more processors and one or more memory. The module may also be realized by the use of dedicated hardware as well as hardware capable of executing software in association with appropriate software. When provided by a processor, the modules may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

The memory may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory includes modules and data. The modules include routines, programs, objects, components, data structures, etc., which perform particular tasks or implement particular abstract data types. The data, amongst other things, serves as a repository for storing data processed, received, and generated by one or more of the modules.

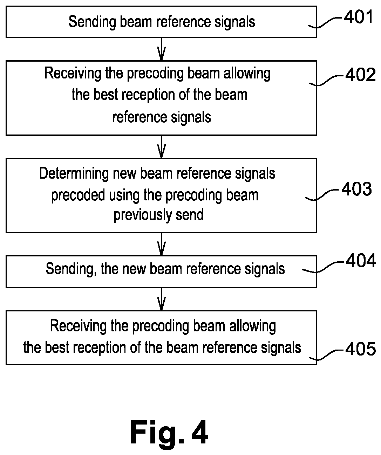

The figure 4 presents the method of the figure 3 from the point of view of the base station. This method comprises the following iterative steps:

A step 401 of sending, to the user equipment, beam reference signals

A step 402 of receiving, from the user equipment, a precoding beam allowing the best reception of the beam reference signals

A step 403 of determining new beam reference signals precoded using the precoding beam previously received

A step 404 of sending, to the user equipment, the new beam reference signals precoded using the precoding beam previously send

A step 405 of receiving, from the user equipment, a precoding beam allowing the best reception of the new beam reference signals

The iterative process stops when the lowest beamwidth is reached for a beam switching rate that do not exceed a pre-set upper bound.

This method can be applied to any precoding beams (either digital, hybrid or analog) with multiple possible beamwidths. Per beamwidth, there is a set of precoders to cover a given spatial area (in azimuth and elevation).

An embodiment of the present subject matter is a base station. This base stations contains different modules configured to realize the method of the figure 4. This base station comprises receiving means and transmission means. The receiving means are configured:

- to receive, from the user equipment, the precoding beam allowing the best reception of the beam reference signals and
- to receive, from the user equipment, the new precoding beam allowing the best reception of the beam reference signals

The transmissions means are configured:

- to send, to the user equipment, beam reference signals and
- to send, to the user equipment, the new beam reference signals precoded using the precoding beam previously sent

This base station also comprises a plurality of modules. These modules are configured to determine new beam reference signals precoded using the precoding beam previously received.

The different modules will be realized by one or more processors and one or more memory. The module may also be realized by the use of dedicated hardware as well as hardware capable of executing software in association with appropriate software. When provided by a processor, the modules may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

The memory may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory includes modules and data. The modules include routines, programs, objects, components, data structures, etc., which perform particular tasks or implement particular abstract data types. The data, amongst other things, serves as a repository for storing data processed, received, and generated by one or more of the modules.

A person skilled in the art will readily recognize that steps of the methods, presented above, can be performed by programmed computers. Herein, some embodiments are also intended to cover program storage devices, for example, digital data storage media, which are machine or computer readable and encode machine-executable or computer-executable programs of instructions, where said instructions perform some or all of the steps of the described method. The program storage devices may be, for example, digital memories, magnetic storage media, such as a magnetic disks and magnetic tapes, hard drives, or optically readable digital data storage media.

An embodiment of the subject matter is a computer-readable medium having embodied thereon a computer program configured to realize the method, presented figure 1, to select a precoding beam among a set of possible precoding beams. This method comprises an initial step 101 of selecting one of the possible beamwidths. After that the method comprises the following iterative steps:

- a step 102 of determining measurements associated to precoding beams having this selected beamwidth and
- a step 103 of selecting the current precoding beam as the one, among the precoding beams having this selected beamwidth, with the best measurement and
- a step 104 of updating the measurements associated to the precoding beams having the selected beamwidth and

Furthermore and if one of the measurement associated to one of the precoding beams, having the selected beamwidth, is above the measurement associated to the current precoding beam, the method comprising

- a step 105 of changing the current precoding beam to the one with the measurements above the measurements associated to the former current precoding beam
- a step 106 of updating a beam switching rate and

  - when the beam switching rate is above a first threshold a step 107 of increasing the selected beamwidth.
  - when the beam switching rate is below a second threshold a step 108 of decreasing the selected beamwidth.


## Claims

1.  Method to select a precoding beam among a set of possible precoding beams, this selected precoding beam being used to exchange data between a base station and a user equipment,
    the possible precoding beams being grouped according to their beamwidth out of a set of possible beamwidths,
    the method comprising an initial step (101) of selecting one of the possible beamwidths so called selected beamwidth and
    the following iterative steps:

    • a step (102) of determining measurements associated to precoding beams having this selected beamwidth and
    • a step (103) of selecting the current precoding beam as the one, among the precoding beams having this selected beamwidth, with the best measurements and
    • a step (104) of updating the measurements associated to the precoding beams having the selected beamwidth and
    Furthermore and if one of the measurement associated to one of the precoding beams, having the selected beamwidth, is above the measurement associated to the current precoding beam, the method comprising
    • a step (105) of changing the current precoding beam to the one with the measurements above the measurements associated to the former current precoding beam and
    • a step (106) of updating a beam switching rate and

      • when the beam switching rate is above a first threshold a step (107) of increasing the selected beamwidth
      • when the beam switching rate is below a second threshold a step (108) of decreasing the selected beamwidth.

2.  Method according to claim 1 wherein the initial step (101) of selecting one of the possible beamwidths is also configured to select the largest beamwidth.

3. Method according to claims 1 or 2 wherein the step (102) of determining measurements associated to precoding beams having this selected beamwidth is also configured to calculate reception power of reference signals transmitted using precoding beams having this selected beamwidth.

4. Method according to any of the previous claims wherein after the step (106) of updating a beam switching rate and if the beam switching rate is comprised between the first and second threshold the method also comprises a step of keeping the same beamwidth is realized.

5. Method according to any of the previous claims wherein the first threshold and/or second thresholds are determined using optimization theory methods to find the global optimum of a function to maximize.

6. Computer-readable medium having embodied thereon a computer program configured to realize a method to select a precoding beam among a set of possible precoding beams, this selected precoding beam being used to exchange data between a base station and a user equipment,
the possible precoding beams being grouped according to their beamwidth out of a set of possible beamwidths,
the method comprising an initial step (101) of selecting one of the possible beamwidths so called selected beamwidth and the following iterative steps:

- a step (102) of determining measurements associated to precoding beams having this selected beamwidth and
- a step (103) of selecting the current precoding beam as the one, among the precoding beams having this selected beamwidth, with the best measurement and
- a step (104) of updating the measurements associated to the precoding beams having the selected beamwidth and
Furthermore and if one of the measurement associated to one of the precoding beams, having the selected beamwidth, is above the measurement associated to the current precoding beam, the method comprising
- a step (105) of changing the current precoding beam to the one with the measurements above the measurements associated to the former current precoding beam and
- a step (106) of updating a beam switching rate and

- when the beam switching rate is above a first threshold a step (107) of increasing the selected beamwidth
- when the beam switching rate is below a second threshold a step (108) of decreasing the selected beamwidth.

7. Computer-readable medium according to claim 6 wherein the initial step (101) of selecting one of the possible beamwidths is also configured to select the largest beamwidth.

8. Computer-readable medium according to claims 6 or 7 wherein the a step (102) of determining measurements associated to precoding beams having this selected beamwidth is also configured to calculate reception power of reference signals transmitted using precoding beams having this selected beamwidth.

9. Computer-readable medium according to any of the claims 6 to 8 wherein after the step (106) of updating a beam switching rate and if the beam switching rate is comprised between the first and second threshold the method also comprises a step of keeping the same beamwidth is realized.

10. Computer-readable medium according to any of the claims 6 to 9 wherein the first threshold and/or second thresholds are determined using optimization theory methods to find the global optimum of a function to maximize.

**Patentansprüche**

1. Verfahren zur Auswahl eines Vorcodierungsstrahls aus einer Gruppe von Vorcodierungsstrahlen,
wobei dieser ausgewählte Vorcodierungsstrahl zum Datenaustausch zwischen einer Basisstation und einer Benutzervorrichtung verwendet wird,
wobei die möglichen Vorcodierungsstrahlen entsprechend ihrer Strahlbreite aus einer Gruppe möglicher Strahlbreiten gruppiert werden,
wobei das Verfahren einen ersten Schritt (101) des Auswählens einer der möglichen Strahlbreiten, der so genannten ausgewählten Strahlbreite, und
die folgenden iterativen Schritte umfasst:

• einen Schritt (102) des Bestimmens von Messungen, die mit Vorcodierungsstrahlen mit dieser ausgewählten Strahlbreite verbunden sind, und

• einen Schritt (103) des Auswählens des aktuellen Vorcodierungsstrahls als denjenigen unter den Vorcodierungsstrahlen mit dieser ausgewählten Strahlbreite mit den besten Messungen und

• einen Schritt (104) des Aktualisierens der Messungen, die mit den Vorcodierungsstrahlen mit der ausgewählten Strahlbreite verbunden sind, und

Darüber hinaus und wenn eine der Messungen, die mit einem der Vorcodierungsstrahlen mit der gewählten Strahlbreite verbunden sind, über der Messung liegt, die mit dem aktuellen Vorcodierungsstrahl verbunden ist, wobei das Verfahren umfasst:

• einen Schritt (105) des Änderns des aktuellen Vorcodierungsstrahls in denjenigen mit den Messungen über den Messungen, die mit dem vorherigen aktuellen Vorcodierungsstrahl verbunden sind, und

• einen Schritt (106) des Aktualisierens einer Strahlumschaltrate und

• wenn die Strahlumschaltrate über einem ersten Schwellenwert liegt, einen Schritt (107) des Erhöhens der ausgewählten Strahlbreite

• wenn die Strahlumschaltrate unter einem zweiten Schwellenwert liegt, einen Schritt (108) des Verringerns der ausgewählten Strahlbreite.

2. Verfahren nach Anspruch 1, wobei der erste Schritt (101) des Auswählens einer der möglichen Strahlbreiten auch zum Auswählen der größten Strahlbreite konfiguriert ist.

3. Verfahren nach Anspruch 1 oder 2, wobei der Schritt (102) des Bestimmens von Messungen, die mit Vorcodierungsstrahlen mit dieser ausgewählten Strahlbreite verbunden sind, auch zum Berechnen der Empfangsleistung von Referenzsignalen konfiguriert ist, die unter Verwendung von Vorcodierungsstrahlen mit dieser ausgewählten Strahlbreite übertragen werden.

4. Verfahren nach einem der vorhergehenden Ansprüche, wobei nach dem Schritt (106) des Aktualisierens einer Strahlumschaltrate und, wenn die Strahlumschaltrate zwischen dem ersten und zweiten Schwellenwert liegt, das Verfahren auch einen Schritt des Haltens der gleichen Strahlbreite umfasst.

5. Verfahren nach einem der vorhergehenden Ansprüche, wobei der erste Schwellenwert und/oder der zweite Schwellenwert unter Verwendung von Optimierungstheorieverfahren bestimmt werden, um das globale Optimum einer zu maximierenden Funktion zu finden.

6. Computerlesbares Medium, auf dem ein Computerprogramm verkörpert ist, das dazu eingerichtet ist, ein Verfahren zum Auswählen eines Vorcodierungsstrahls aus einer Gruppe möglicher Vorcodierungsstrahlen zu realisieren, wobei dieser ausgewählte Vorcodierungsstrahl zum Datenaustausch zwischen einer Basisstation und einer Benutzervorrichtung verwendet wird, wobei die möglichen Vorcodierungsstrahlen entsprechend ihrer Strahlbreite aus einer Gruppe möglicher Strahlbreiten gruppiert werden, wobei das Verfahren einen ersten Schritt (101) des Auswählens einer der möglichen Strahlbreiten, der so genannten ausgewählten Strahlbreite, und die folgenden iterativen Schritte umfasst:

• einen Schritt (102) des Bestimmens von Messungen, die mit Vorcodierungsstrahlen mit dieser ausgewählten Strahlbreite verbunden sind, und

• einen Schritt (103) des Auswählens des aktuellen Vorcodierungsstrahls als denjenigen unter den Vorcodierungsstrahlen mit dieser ausgewählten Strahlbreite mit der besten Messung und

• einen Schritt (104) des Aktualisierens der Messungen, die mit den Vorcodierungsstrahlen mit der ausgewählten Strahlbreite verbunden sind, und

Darüber hinaus und wenn eine der Messungen, die mit einem der Vorcodierungsstrahlen mit der gewählten Strahlbreite verbunden sind, über der Messung liegt, die mit dem aktuellen Vorcodierungsstrahl verbunden ist, wobei das Verfahren umfasst:

• einen Schritt (105) des Änderns des aktuellen Vorcodierungsstrahls in denjenigen mit den Messungen über den Messungen, die mit dem vorherigen aktuellen Vorcodierungsstrahl verbunden sind, und
• einen Schritt (106) des Aktualisierens einer Strahlumschaltrate und

• wenn die Strahlumschaltrate über einem ersten Schwellenwert liegt, einen Schritt (107) des Erhöhens der ausgewählten Strahlbreite
• wenn die Strahlumschaltrate unter einem zweiten Schwellenwert liegt, einen Schritt (108) des Verringerns der ausgewählten Strahlbreite.

**7.** Computerlesbares Medium nach Anspruch 6, wobei der erste Schritt (101) des Auswählens einer der möglichen Strahlbreiten auch zum Auswählen der größten Strahlbreite konfiguriert ist.

**8.** Computerlesbares Medium nach Anspruch 6 oder 7, wobei der Schritt (102) des Bestimmens von Messungen, die mit Vorcodierungsstrahlen mit dieser ausgewählten Strahlbreite verbunden sind, auch zum Berechnen der Empfangsleistung von Referenzsignalen konfiguriert ist, die unter Verwendung von Vorcodierungsstrahlen mit dieser ausgewählten Strahlbreite übertragen werden.

**9.** Computerlesbares Medium nach einem der Ansprüche 6 bis 8, wobei nach dem Schritt (106) des Aktualisierens einer Strahlumschaltrate und wenn die Strahlumschaltrate zwischen dem ersten und zweiten Schwellenwert liegt, das Verfahren auch einen Schritt des Haltens der gleichen Strahlbreite umfasst.

**10.** Computerlesbares Medium nach einem der Ansprüche 6 bis 9, wobei der erste Schwellenwert und/oder der zweite Schwellenwert unter Verwendung von Optimierungstheorieverfahren bestimmt werden, um das globale Optimum einer zu maximierenden Funktion zu finden.

**Revendications**

**1.** Procédé de sélection d'un faisceau de précodage parmi un ensemble de faisceaux de précodage possibles, ce faisceau de précodage sélectionné étant utilisé pour échanger des données entre une station de base et un équipement utilisateur,
les faisceaux de précodage possibles étant regroupés en fonction de leur largeur de faisceau parmi un ensemble de largeurs de faisceau possibles,
le procédé comprenant une étape initiale (101) de sélection d'une des largeurs de faisceau possibles dite largeur de faisceau sélectionnée et
les étapes itératives suivantes :

• une étape (102) de détermination de mesures associées à des faisceaux de précodage ayant cette largeur de faisceau sélectionnée et
• une étape (103) de sélection du faisceau de précodage en cours comme le faisceau, parmi les faisceaux de précodage ayant cette largeur de faisceau sélectionnée, avec les meilleures mesures et
• une étape (104) d'actualisation des mesures associées aux faisceaux de précodage ayant la largeur de faisceau sélectionnée et
en outre, et si une des mesures associées à un des faisceaux de précodage ayant la largeur de faisceau sélectionnée est au-dessus de la mesure associée au faisceau de précodage en cours, le procédé comprenant
• une étape (105) de remplacement du faisceau de précodage en cours par celui avec les mesures au-dessus des mesures associées à l'ancien faisceau de précodage en cours et
• une étape (106) d'actualisation d'une fréquence de commutation de faisceau et

• quand la fréquence de commutation de faisceau est supérieure à un premier seuil, une étape (107) d'augmentation de la largeur de faisceau sélectionnée,
• quand la fréquence de commutation de faisceau est inférieure à un deuxième seuil, une étape (108) de diminution de la largeur de faisceau sélectionnée.

**2.** Procédé selon la revendication 1 dans lequel l'étape initiale (101) de sélection d'une des largeurs de faisceau possibles est également configurée pour sélectionner la plus grande largeur de faisceau.

**3.** Procédé selon la revendication 1 ou 2 dans lequel l'étape (102) de détermination de mesures associées à des faisceaux de précodage ayant cette largeur de faisceau sélectionnée est également configurée pour calculer une puissance de réception de signaux de référence transmis au moyen de faisceaux de précodage ayant cette largeur de faisceau sélectionnée.

4. Procédé selon l'une quelconque des revendications précédentes, le procédé comprenant également, après l'étape (106) d'actualisation d'une fréquence de commutation de faisceau et si la fréquence de commutation de faisceau est comprise entre le premier et le deuxième seuil, une étape de conservation de la même largeur de faisceau.

5. Procédé selon l'une quelconque des revendications précédentes dans lequel le premier seuil et/ou le deuxième seuil sont déterminés au moyen de méthodes basées sur la théorie d'optimisation pour trouver l'optimum global d'une fonction à maximiser.

6. Support lisible par ordinateur ayant, matérialisé sur celui-ci, un programme informatique configuré pour réaliser un procédé de sélection d'un faisceau de précodage parmi un ensemble de faisceaux de précodage possibles, ce faisceau de précodage sélectionné étant utilisé pour échanger des données entre une station de base et un équipement utilisateur, les faisceaux de précodage possibles étant regroupés en fonction de leur largeur de faisceau parmi un ensemble de largeurs de faisceau possibles, le procédé comprenant une étape initiale (101) de sélection d'une des largeurs de faisceau possibles dite largeur de faisceau sélectionnée et les étapes itératives suivantes :

   • une étape (102) de détermination de mesures associées à des faisceaux de précodage ayant cette largeur de faisceau sélectionnée et
   • une étape (103) de sélection du faisceau de précodage en cours comme le faisceau, parmi les faisceaux de précodage ayant cette largeur de faisceau sélectionnée, avec les meilleures mesures et
   • une étape (104) d'actualisation des mesures associées aux faisceaux de précodage ayant la largeur de faisceau sélectionnée et
   en outre, et si une des mesures associées à un des faisceaux de précodage ayant la largeur de faisceau sélectionnée est au-dessus de la mesure associée au faisceau de précodage en cours, le procédé comprenant
   • une étape (105) de remplacement du faisceau de précodage en cours par celui avec les mesures au-dessus des mesures associées à l'ancien faisceau de précodage en cours et
   • une étape (106) d'actualisation d'une fréquence de commutation de faisceau et

   • quand la fréquence de commutation de faisceau est supérieure à un premier seuil, une étape (107) d'augmentation de la largeur de faisceau sélectionnée,
   • quand la fréquence de commutation de faisceau est inférieure à un deuxième seuil, une étape (108) de diminution de la largeur de faisceau sélectionnée.

7. Support lisible par ordinateur selon la revendication 6 dans lequel l'étape initiale (101) de sélection d'une des largeurs de faisceau possibles est également configurée pour sélectionner la plus grande largeur de faisceau.

8. Support lisible par ordinateur selon la revendication 6 ou 7 dans lequel l'étape (102) de détermination de mesures associées à des faisceaux de précodage ayant cette largeur de faisceau sélectionnée est également configurée pour calculer une puissance de réception de signaux de référence transmis au moyen de faisceaux de précodage ayant cette largeur de faisceau sélectionnée.

9. Support lisible par ordinateur selon l'une quelconque des revendications 6 à 8, le procédé comprenant également, après l'étape (106) d'actualisation d'une fréquence de commutation de faisceau et si la fréquence de commutation de faisceau est comprise entre le premier et le deuxième seuil, une étape de conservation de la même largeur de faisceau.

10. Support lisible par ordinateur selon l'une quelconque des revendications 6 à 9 dans lequel le premier seuil et/ou le deuxième seuil sont déterminés au moyen de méthodes basées sur la théorie d'optimisation pour trouver l'optimum global d'une fonction à maximiser.

```
┌─────────────────────────────────────┐
│   Initial step 101 of selecting one of  │ ⌐101
│      the possible beamwidths            │
└─────────────────────────────────────┘
                  │
                  ▼
┌─────────────────────────────────────┐
│    Determination of measurements        │ ⌐102
│     associated to precoding beams       │
└─────────────────────────────────────┘
                  │
                  ▼
┌─────────────────────────────────────┐
│    Selection of the current precoding   │ ⌐103
│  beam as the one with the best measurements │
└─────────────────────────────────────┘
                  │
                  ▼
┌─────────────────────────────────────┐
│        Updating the measurements        │ ⌐104
│      associated to the precoding beams  │
└─────────────────────────────────────┘
                  │
                  ▼
          ◇ one of the updated
            measurements above        No
            the current precoding ─────────►
            beam measurements?
                  │
                  │ Yes
                  ▼
┌─────────────────────────────────────┐
│    Changing the current precoding       │
│       beam to the one with the          │ ⌐105
│    measurements above the former        │
│     precoding beam measurements         │
└─────────────────────────────────────┘
                  │
                  ▼
┌─────────────────────────────────────┐
│      Updating a beam switching rate     │ ⌐106
└─────────────────────────────────────┘

  107                                        108
Switching rate > threshold 1    Switching rate < threshold 2

┌──────────────────────────┐  ┌──────────────────────────┐
│ Increasing selected beamwidth │  │ Decreasing selected beamwidth │
└──────────────────────────┘  └──────────────────────────┘
```

# Fig. 1

**Fig. 2**

| Receiving beam reference signals | 301 |

↓

| Performing quality measurements of the reception of these beam reference signals | 302 |

↓

| Determining which precoding beams allow the best reception of the beam reference signals | 303 |

↓

| Sending the precoding beam allowing the best reception of the beam reference signals | 304 |

↓

| Receiving new beam reference signals precoded using the precoding beam previously send | 305 |

↓

| Performing quality measurements of the reception of these new beam reference signals | 306 |

↓

| Determining which precoding beams allow the best reception of the new beam reference signals | 307 |

↓

**Fig. 3**

| Sending, to the base station, the precoding beam allowing the best reception of the new beam reference signals | 308 |

```
┌─────────────────────────────────────┐
│      Sending beam reference signals  │──401
└─────────────────────────────────────┘
                  │
                  ▼
┌─────────────────────────────────────┐
│   Receiving the precoding beam allowing │──402
│       the best reception of the beam    │
│          reference signals              │
└─────────────────────────────────────┘
                  │
                  ▼
┌─────────────────────────────────────┐
│  Determining new beam reference signals │──403
│     precoded using the precoding beam   │
│           previously send               │
└─────────────────────────────────────┘
                  │
                  ▼
┌─────────────────────────────────────┐
│    Sending, the new beam reference signals │──404
└─────────────────────────────────────┘
                  │
                  ▼
┌─────────────────────────────────────┐
│   Receiving the precoding beam allowing        │
│  the best reception of the beam reference signals │──405
└─────────────────────────────────────┘
```

# Fig. 4

EP 3 367 588 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Performance and feasibility of different switched-BEAM antennas for the stratospheric platform mobile communications covering newly developing regions. **NOFAL M et al.** RADIO SCIENCE NINETEENTH NATIONAL CONFERENCE OF THE PROCEEDINGS NRSC. IEEE, 19 March 2002, 133-140

- **NOKIA ALCATEL-LUCENT ; SHANGHAI BELL.** RRM Requirements supporting NR beam management. *3GPP DRAFT; R4-1610329*
- **ZTE et al.** Group based beam management for NR-MIMO. *3GPP DRAFT; R1-1701798*